# EUROPÄISCHE PATENTANMELDUNG

(11) **EP 0 889 268 A2**
(43) Veröffentlichungstag der Anmeldung: **07.01.1999**
(21) Anmeldenummer: 98112148.6
(22) Anmeldetag: 01.07.1998
(51) Int. Cl.: F16K 31/52

(54) **Flüssigkeitshahn**

(30) Priorität: 02.07.1997 DE 29711519 U
(71) Anmelder: Krumbein, Wolfgang, 99891 Tabarz (DE)
(72) Erfinder: Krumbein, Wolfgang, 99891 Tabarz (DE)
(74) Vertreter: WALTHER, WALTHER & HINZ Patentanwälte

(57) **Zusammenfassung**

Flüssigkeitshahn, inbesondere für Fruchtsaft, mit einem Kopf mit einem verschließbaren Aus- oder Einlauf, wobei der Kopf (10) eine mit dem Ein- und Auslauf in Verbindung stehende Kammer (13) aufweist, wobei durch einen beweglichen Stößel (30) der Ein- oder Auslauf (11, 12) der Kammer verschließbar ist, wobei der Stößel (30) durch einen Hebel (40) betätigbar ist.

## Beschreibung

Die Erfindung betrifft einen Flüssigkeitshahn, insbesondere für Fruchtsaft, mit einem Kopf mit einem verschließbaren Aus- und Einlauf.

Ein Hahn der eingangs genannten Art ist aus dem Stand der Technik hinreichend bekannt. Üblicherweise besteht ein derartiger Hahn aus einem Kopf, der einen Drehknopf aufweist, wobei durch den Drehknopf im Kopf des Flüssigkeitshahnes ein Schieber betätigt wird, mit dessen Hilfe der Hahn verschließbar ist. Derartige Hähne sind allerdings nicht dazu geeignet, in Abhängigkeit von der Offen- bzw. Geschlossenstellung des Hahnes bzw. der entsprechenden Stellung des Drehknopfes mit einem Signalgeber gekoppelt zu werden, mit dessen Hilfe andere Vorgänge steuerbar sind. Ansteuerbar kann beispielsweise der Zulauf von Flüssigkeit zu dem Hahn sein.

Der Erfindung liegt daher die Aufgabe zugrunde, einen Flüssigkeitshahn der eingangs genannten Art zu schaffen, der geeignet ist, mit einer Steuerungseinrichtung gekoppelt zu werden.

Die Aufgabe wird erfindungsgemäß dadurch gelöst, daß der Kopf eine mit dem Ein- und Auslauf in Verbindung stehende Kammer aufweist, wobei durch einen beweglichen Stößel der Ein- oder Auslauf der Kammer verschließbar ist, wobei der Stößel durch einen Hebel betätigbar ist. Durch diesen Hebel besteht die Möglichkeit, Sensoren anzusteuern, die gegebenenfalls weitere Signale an eine Vorrichtung senden, um die Flüssigkeitszufuhr zu dem Hahn zu steuern, das heißt, Flüssigkeit zuführen zu lassen oder die Flüssigkeitszufuhr zu dem Hahn zu unterbinden. Dies ist insbesondere insofern von Interesse, als hierdurch die Möglichkeit besteht zu verhindern, daß der Hahn beziehungsweise die Leitung zum Hahn selbst mit Flüssigkeit gefüllt bleibt, obwohl keine Flüssigkeit abverlangt wird. Ist nämlich die Flüssigkeit leicht verderblich, ist das Vorhandensein von Flüssigkeit in den Hohlräumen des Hahnes von Nachteil. Vorteilhaft zeigt hierzu der Hebel einen Arm auf, wobei der Arm geeignet ist, mit einem Sensor in Verbindung zu treten.

Nach einem besonderen Merkmal der Erfindung ist vorgesehen, daß der Stößel einen Stößelkopf aufweist, der in Schließstellung an einem Dichtrand, der insbesondere eine winklige Dichtkante aufweist, des Auslaufs anliegt. Insbesondere durch die Ausbildung als winklige Dichtkante wird erreicht, daß der Stößel an der Dichtkante anliegendes Fruchtfleisch zerquetschen kann, und mithin gewährleistet ist, daß der Hahn immer dicht abschließt. Um einen möglichst sauberen Abschluß zu gewährleisten, ist vorgesehen, daß der Stößel entgegen einer Federkraft aus der Schließstellung bringbar ist. Das heißt, daß der Stößel unter der Kraft einer Feder auf die Dichtkante wirkt. Die Kraft der Feder ist demzufolge so zu bemessen, daß Fruchtfleisch oder Fruchtfasern durch den Stößel an der Dichtkante zerquetscht werden.

Im einzelnen ist weiterhin vorgesehen, daß der Stößelkopf endseitig kegelförmig ausgebildet ist. Darüber hinaus zeigt der Einlauf einen Einlaufstutzen, durch den die Flüssigkeit dem Hahn zugeführt wird.

Die Ausbildung des Hebels als Kniehebel ermöglicht, mit einer relativ geringen Kraft eine verhältnismäßig starke Feder zu komprimieren. Wie bereits oben ausgeführt, ist eine gewisse Federkraft erforderlich, um sicherzustellen, daß durch den Stößelkopf das Fruchtfleisch an der Dichtkante des Auslaufs zerquetscht werden kann.

Anhand der Zeichnungen wird die Erfindung nachstehend beispielhaft näher erläutert.

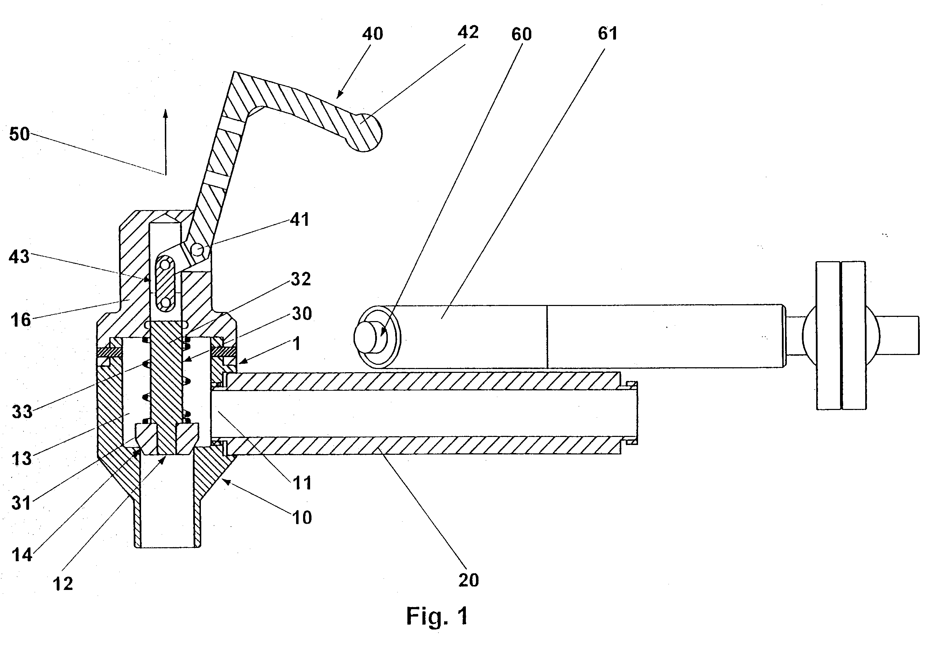

- Figur 1: zeigt den Hahn in einer Seitenansicht im Schnitt;

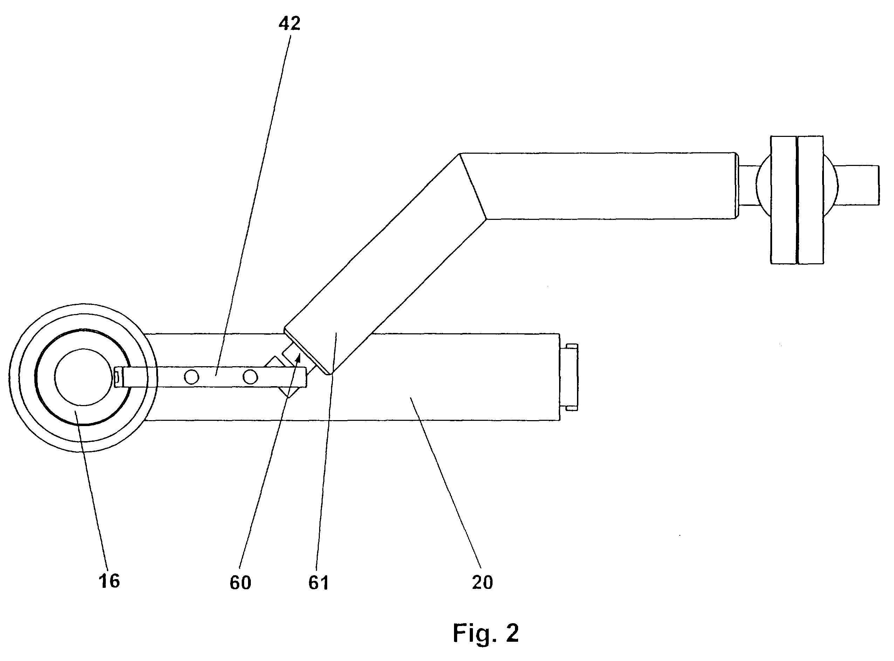

- Figur 2: zeigt eine Ansicht von oben.

Der in der Zeichnung insgesamt mit 1 bezeichnete Flüssigkeitshahn zeigt einen insgesamt mit 10 bezeichneten Kopf mit einem Einlaß 11 und einem Auslaß 12. Im Bereich des Einlasses 11 befindet sich der Einlaßstutzen 20.

Der Kopf 10 besitzt darüber hinaus die Kammer 13, die im Übergang zum Auslaß 12 eine Dichtkante 14 zeigt. An dieser Dichtkante 14 liegt in Geschlossenstellung des Hahnes der insgesamt mit 30 bezeichnete Stößel mit seinem Stößelkopf 31 an. Der Stößelkopf 31 zeigt einen Stößelschaft 32, der mit dem insgesamt mit 40 bezeichneten Hebel verbunden ist. Die Verbindung zwischen dem Stößelschaft 32 und dem Hebel 40 erfolgt über eine insgesamt mit 43 bezeichnete Gelenkverbindung. Der Hebel 40 ist als Kniehebel ausgebildet und zeigt demzufolge ein Gelenk 41, mit welchem er an einer Brücke 16 des Kopfes 10 angeordnet ist. An dem einen Ende zeigt der Hebel 40 darüber hinaus den Arm 42, der mit einem Sensor 60 zusammenarbeitet. Der Sensor 60 ist durch einen Sensorarm 61 gehalten. Um zu gewährleisten, daß der Stößelkopf 31 des Stößel 30 mit einer hohen Kraft auf die Dichtkante 14 drückt, steht der Stößelkopf 31 unter der Kraft einer Druckfeder 33. Durch den Hebel 40 wird der Stößelschaft in Richtung des Pfeiles 50 gegen die Kraft der Feder 33 ausgelenkt und gibt hierbei den Auslaß 12 frei.

## Patentansprüche

1. Flüssigkeitshahn, inbesondere für Fruchtsaft, mit einem Kopf mit einem verschließbaren Aus- oder Einlauf
**dadurch gekennzeichnet**, daß
der Kopf (10) eine mit dem Ein- und Auslauf in Verbindung stehende Kammer (13) aufweist, wobei durch einen beweglichen Stößel (30) der Ein- oder Auslauf (11, 12) der Kammer verschließbar ist, wobei der Stößel (30) durch einen Hebel (40) betätigbar ist.

2. Flüssigkeitshahn nach Anspruch 1,
**dadurch gekennzeichnet**, daß
der Stößel (30) entgegen einer Federkraft (33) aus der Schließstellung bringbar ist.

3. Flüssigkeitshahn nach Anspruch 1,
**dadurch gekennzeichnet**, daß
der Stößel (30) einen Stößelkopf (31) aufweist, der in Schließstellung an einem Dichtrand (14) des Aus- oder Einlaufs (11, 12) anliegt.

4. Flüssigkeitshahn nach Anspruch 3,
**dadurch gekennzeichnet**, daß
der Dichtrand (14) eine winklige Dichtkante aufweist.

5. Flüssigkeitshahn nach einem der voranstehenden Ansprüche,
**dadurch gekennzeichnet**, daß
der Stößelkopf (31) endseitig kegelförmig ausgebildet ist.

6. Flüssigkeitshahn nach einem der voranstehenden Ansprüche,
**dadurch gekennzeichnet**, daß
der Einlauf (11) einen Einlaufstutzen (20) aufweist.

7. Flüssigkeitshahn nach einem der voranstehenden Ansprüche,
**dadurch gekennzeichnet**, daß
der Hebel (40) als Kniehebel ausgebildet ist.

8. Flüssigkeitshahn nach einem der voranstehenden Ansprüche,
**dadurch gekennzeichnet**, daß
der Hebel (40) einen Arm (42) aufweist.
